(19) Europäisches Patentamt / European Patent Office / Office européen des brevets

(11) **EP 3 845 776 A1**

(12) **EUROPEAN PATENT APPLICATION**

(43) Date of publication:
**07.07.2021 Bulletin 2021/27**

(51) Int Cl.:
*F16H 7/02* (2006.01)  *F16H 7/04* (2006.01)
*F16H 55/36* (2006.01)

(21) Application number: **21150031.9**

(22) Date of filing: **04.01.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **03.01.2020 KR 20200000579**

(71) Applicant: **Wiworld Co., Ltd.**
**Daejeon 34029 (KR)**

(72) Inventor: **PARK, Chan Goo**
**34033 Yuseong-gu, Daejeon (KR)**

(74) Representative: **Bertsch, Florian Oliver**
**Kraus & Weisert**
**Patentanwälte PartGmbB**
**Thomas-Wimmer-Ring 15**
**80539 München (DE)**

(54) **POWER TRANSMISSION APPARATUS**

(57)

FIG. 7

**Description**

**CROSS-REFERENCE TO RELATED APPLICATIONS**

This application claims priority under 35 U.S.C. §119 to Korean Patent Application No. 10-2020-0000579, filed on Jan 03, 2020, in the Korean Intellectual Property Office, the disclosure of which is incorporated herein by reference in its entirety.

**TECHNICAL FIELD**

The following disclosure relates to a power transmission apparatus capable of forming a high gear ratio without increasing a diameter of a pulley.

**BACKGROUND**

A power transmission apparatus is configured to transmit a rotational force from a driving shaft that rotates while forming an axis of a power source to a driven shaft that forms an axis of an apparatus to be rotated, and is generally classified into a spur gear, an internal gear, a rack, a helical gear, a bevel gear, a screw gear, a worm gear, and a pulley having two shafts separated by a predetermined distance to transmit power by attaching a rope or a belt surrounding the shafts according to the state of the two shafts or the shape of the teeth. At this time, the worm gear that rotates with two shafts orthogonal to each other is variously utilized for a differential apparatus requiring a high reduction gear ratio and an elevation drive apparatus of an antenna.
However, the conventional power transmission apparatus as described above has to increase a diameter of the driven shaft due to the number of screw threads (gear teeth) formed along a tooth form of the screw threads engaged with each other, that is, an outer circumferential surface in order to achieve a high gear ratio. Accordingly, there is a limitation that an overall profile of an apparatus in which the power transmission apparatus is installed should be formed to be high.

[Related Art Document]

[Patent Document]

Korean Patent Laid-Open Publication No. 2019-0129774 ("Power transmission apparatus" published on November 20, 2019)

**SUMMARY**

An embodiment of the present invention is directed to providing a power transmission apparatus that is installed to form a high gear ratio in a limited space as an overall profile is reduced.
In one general aspect, a power transmission apparatus for transmitting power from a driving shaft that rotates by receiving power to a driven shaft that rotates by receiving the power of the driving shaft, includes: a pulley having an outer circumferential surface forming a predetermined angle; a power transmission member that is provided to surround the driving shaft and the outer circumferential surface of the pulley and transmits a rotational force of the driving shaft; and a driven part provided outward in a radial direction of the pulley and forming a pair of catching ends respectively surrounding the power transmission member in a direction opposite to each other.
The power transmission member may be provided to surround the driving shaft and an outer circumferential surface of the driven part on one side in a thickness direction, and surround the outer circumferential surface of the pulley on the other side.
The pair of catching ends of the driven part may be formed in a straight line in the opposite direction, and the power transmission member may be configured to surround the outer circumferential surface of the pulley so that one end portion that surrounds the driving shaft surrounds any one catching end provided in the facing opposite direction.
The pair of catching ends of the driven part may be configured to have different profiles in an axial direction of the pulley.
The pulley and the driven part may be configured to rotate with the driven shaft in parallel.
The driven part may be configured to rotate with the driven shaft in parallel, and the pulley may be fixed to be independent of the driven part.
The pulley may be configured with a plurality of pulleys including: a first pulley forming an opening partially hollowed on the outer circumferential surface, and a second pulley provided to be spaced apart by a predetermined distance outward in a radial direction of the first pulley and forming an opening in the same direction as the first pulley, the driven part may be interposed between the first pulley and the second pulley, and the power transmission member may be configured to surround the driving shaft and the driven part on one side in the thickness direction, and surround the outer circumferential surface of the plurality of pulleys on the other side.

The first driven part and the second driven part may be provided on the same plane concentric with the pulley.

The driven part may form a plurality of catching ends provided to protrude in a direction perpendicular to an outer circumferential direction of the pulley, and the power transmission member may be configured to alternately surround outer circumferential surfaces of the plurality of catching ends in the circumferential direction of the pulley.

The pulley may form a concentric circle with the driven shaft, and may be configured to rotate with the driven shaft in parallel, and the driven part may be fixed so as to rotate with the pulley in parallel.

The power transmission apparatus may further include a plurality of fixed rollers spaced outward in the radial direction of the pulley by a predetermined distance to be symmetrical with each other with respect to the driven shaft, and provided corresponding to the number of the catching ends adjacent in an axial direction of the driven shaft, wherein the power transmission member alternately surrounds the plurality of fixed rollers and catching ends provided in the same direction with respect to the driven shaft.

In another general aspect, a power transmission apparatus includes a pulley having an outer circumferential surface forming a predetermined angle; a power transmission member that is provided to surround the driving shaft and the outer circumferential surface of the pulley and transmits a rotational force of the driving shaft; and a driven part provided outward in a radial direction of the pulley and forming a pair of catching ends respectively surrounding the power transmission member in a direction opposite to each other, wherein the power transmission member is made of a belt having a plurality of screw threads formed therein, and is provided to surround the driving shaft, the pair of catching ends, and the outer circumferential surface of the pulley inwardly, and the outer circumferential surface of the pulley is formed with a plurality of screw threads engaged with an inner side of the power transmission member.

The pulley may be configured to rotate with the driven shaft in parallel, and the driven part may be fixed to be independent of the pulley.

The driven part may be configured to rotate with the driven shaft in parallel, and the pulley may be fixed to be independent of the driven part.

## BRIEF DESCRIPTION OF THE DRAWINGS

FIG. 1 is a view illustrating a power transmission apparatus according to a first embodiment of the present invention.
FIG. 2 is an illustrative view for explaining a rotation radius of the power transmission apparatus of the present invention according to a pulley of which an outer circumferential surface forms various angles.
FIGS. 3 and 4 are views illustrating modified examples of the power transmission apparatus according to the first embodiment of the present invention.
FIGS. 5 and 6 are views illustrating a power transmission apparatus according to a third embodiment of the present invention.
FIGS. 7 and 8 are views illustrating a power transmission apparatus according to a 1-1-th embodiment of the present invention.
FIG. 9 is a view illustrating a power transmission apparatus according to a 1-2-th embodiment of the present invention.
FIG. 10 is a view illustrating a power transmission apparatus according to a 2-1-th embodiment of the present invention.
FIG. 11 is a view illustrating a power transmission apparatus according to a 2-2-th embodiment of the present invention.

## DETAILED DESCRIPTION OF EMBODIMENTS

In the present invention, various modifications may be made and various embodiments may be provided, and specific embodiments will be illustrated in the drawings and described in detail. However, this is not intended to limit the present invention to a specific embodiment, it is to be understood to include all modifications, equivalents, and substitutes included in the spirit and scope of the present invention.

It is to be understood that when one element is referred to as being "connected to" or "coupled to" another element, it may be connected directly to or coupled directly to another element or be connected to or coupled to another element while having the other element interposed therebetween.

Unless otherwise defined, all terms, including technical or scientific terms, used herein have the same meaning as commonly understood by one of ordinary skill in the art to which the present invention belongs.

It should be interpreted that terms defined by a generally used dictionary are identical with the meanings within the context of the related art, and they should not be ideally or excessively formally interpreted unless the context clearly dictates otherwise.

Hereinafter, a technical spirit of the present invention will be described in more detail with reference to the accompanying drawings.

The accompanying drawings are only examples shown to describe the technical spirit of the present invention in more detail, and therefore, the technical spirit of the present invention is not limited to the form of the accompanying drawings.

< First embodiment: power transmission member - power transmission according to a pair of catching ends >

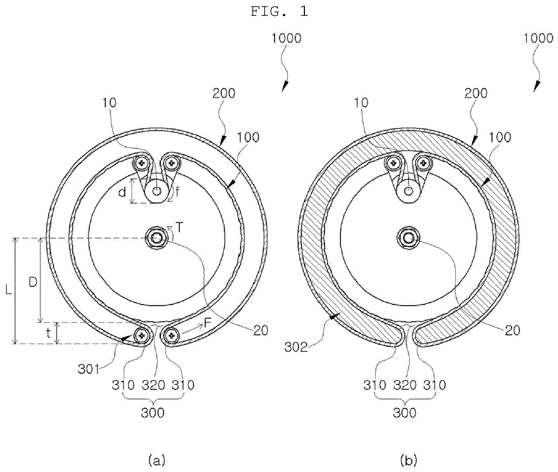

FIG. 1 is a view illustrating a power transmission apparatus according to a first embodiment of the present invention. Referring to FIG. 1, the present invention relates to a power transmission apparatus for transmitting power from a driving shaft 10 that rotates by receiving power to a driven shaft 20 that rotates by receiving the power of the driving shaft 10. A power transmission apparatus 1000 according to a first embodiment of the present invention may include a pulley 100 having an outer circumferential surface forming a predetermined angle, a power transmission member 200 that is provided to surround the driving shaft 10 and the outer circumferential surface of the pulley 100 and transmits a rotational force of the driving shaft 10, and a driven part 300 provided outward in a radial direction of the pulley 100 and forming a pair of catching ends 310 respectively surrounding the power transmission member 200 in a direction opposite to each other.

At this time, the power transmission member 200 is configured to surround the driving shaft 10 and an outer circumferential surface of the driven part 300 on one side in a thickness direction, and surround the outer circumferential surface of the pulley 100 on the other side, such that the driven part 300 made to rotate with the driven shaft 20 in parallel may rotate along the outer circumferential surface of the pulley 100 configured and fixed to be independent from the driven part 300 to transmit the rotational force of the driving shaft 10 to the driven shaft 20, or the pulley 100 and the driven part 300 may be configured to rotate in parallel with the driven shaft 20, thereby rotating the pulley 100, the driven part 300, and the driven shaft 20 or a motor part coupled to the driving shaft 10 by the rotational force of the driving shaft 10.

Here, the power transmission member 200 is each wound around the pair of catching ends 310 to transmit power to the pair of catching ends 310 by rotation of the driving shaft 10, and may be formed of a belt, a wire, a rope, etc., which form a closed loop and are wound around the pair of catching ends 310, respectively. At this time, the pair of catching ends 310 includes a pair of blocks and tackles 301 provided outward in a radial direction of the pulley 100 and spaced by a predetermined distance from each other in a straight line, or a half-moon member 302 that has a predetermined thickness and surrounds the outer circumferential surface of the pulley 100, and forms an opening 320 communicated with a predetermined length in the radial direction of the pulley 100, such that the power transmission member 200 may be configured to pass through between the pair of pulleys 301 spaced apart from each other and the opening 320 of the half-moon member 302 to surround each of the catching ends 310. At this time, the driving shaft 10 may include a supply/recovery roller capable of winding or unwinding the power transmission member 200 or a gear and a pulley that are engaged with a timing belt to transmit power when the power transmission member 200 is made of the timing belt.

In more detail, when the driving shaft 10 rotates so that a length of one side of the power transmission member 200 which is drawn out from the driving shaft 10 to surround the outer circumferential surface of the pulley 100 and wound around any one of the pair of catching ends 310 becomes gradually shorter, the pair of catching ends 310, which are fixed to rotate in parallel with each other, rotate in a counterclockwise direction in a direction facing FIG. 1 with respect to the pulley. At this time, torque (T) in the driven shaft 20 according to a rotational force (f) of the driving shaft is proportional to a product ($T \propto L \times F$) of a linear distance (L) from the driven shaft to the catching end 310 and the rotational force (F) in an orthogonal direction applied to the catching end 310. At this time, the rotational force (F) in the orthogonal direction acting on the catching end 310 is proportional to a rotational force (f*cos(c)) of the driving shaft 10 from which the power transmission member 200 acting in a contact surface direction of the catching end 310 and the pulley 100 is recovered. That is, the rotational force (torque, T) acting on the driving shaft is derived from Equation 1 below. At this time, the tangential angle (c) is in the range of $0 < c < 1/2\,\pi$, and is determined by a distance t spaced from the outer circumferential surface of the pulley 100 to the catching end 310.

$$\text{Equation 1:} \quad T \propto L \times F = (D+t) \times (f \times \cos(c))$$

Hereinafter, the power transmission apparatus 1000 according to an embodiment of the present invention is described as an example of a configuration in which the driven part 300 including the catching end 310 rotates, but a fixed relationship between the pulley 100 and the driven part 300 according to the rotation of the power transmission apparatus 1000 of the present invention may be variously modified without departing from the gist of the present invention unless a specific qualifying phrase or configuration is mentioned.

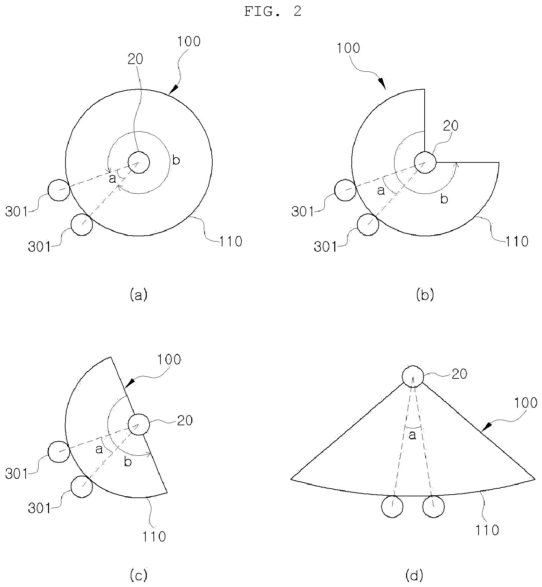

FIG. 2 is an illustrative view for explaining a rotation radius of the power transmission apparatus of the present invention according to a pulley of which an outer circumferential surface forms various angles. Referring to FIG. 2, in the power transmission apparatus 1000 according to the present invention, a rotation radius of the driven shaft 20 is determined by a rotation angle (b) formed by the outer circumferential surface of the pulley 100. That is, the power transmission apparatus 1000 has an advantage of being able to efficiently design the apparatus according to a required gear ratio and space by limiting the rotation angle (b) formed by the outer circumferential surface of the pulley 100. At this time, the pair of catching ends 310 moving in parallel along the outer circumferential surface of the pulley 100 is spaced apart by a predetermined distance in a direction facing each other. At this time, the rotation radius of the driven shaft 20 is limited by a non-rotation angle (a) formed according to a distance between the pair of catching ends 310 from the driven shaft 20 (that is, the rotation radius of the driven shaft 20 = the rotation angle (b) formed by the outer circumferential surface of the pulley 100 - the non-rotation angle (a) according to the distance between the pair of catching ends 310).

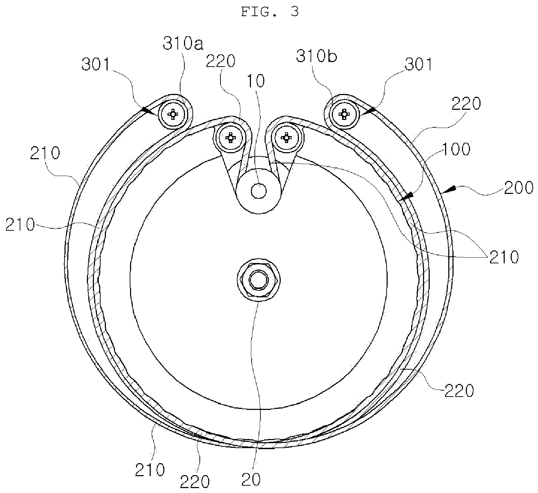

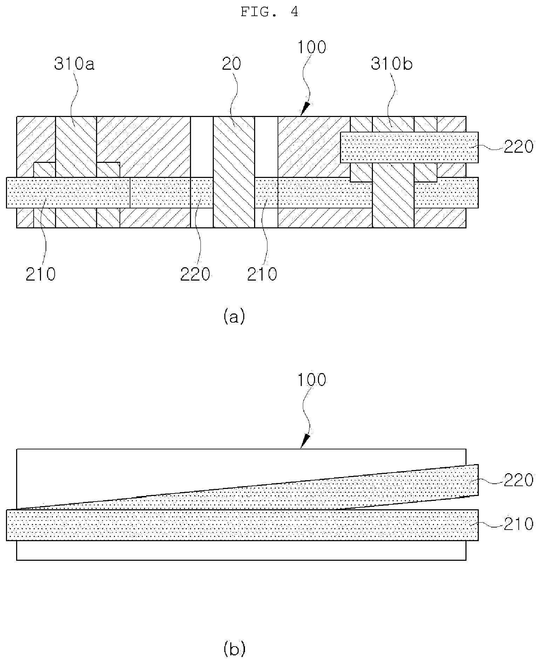

FIG. 3 is a configuration view illustrating a modified example of the power transmission apparatus according to the first embodiment of the present invention, (a) of FIG. 4 is a rear view of FIG. 3, and (b) of FIG. 4 is a front view of FIG. 3. Referring to FIGS. 3 and 4, in order to overcome the limitation in which the rotation radius of the driven shaft 20 is limited due to the non-rotation angle (a) according to the distance between the pair of catching ends 310 described above, the power transmission apparatus 1000 of the present invention may be configured so that the power transmission member 200 is configured to be twisted at least once or more to surround the pulley 100 and rotated by 360 degrees or more without limiting a rotation radius of the driven part 300.

In more detail, the power transmission member 200 is wound so that one end 210 surrounding the driving shaft 10 surrounds the outer circumferential surface of the pulley 100 to surround any one catching end 310 provided in a facing opposite direction, and then surrounds any one catching end 310 and again surrounds the outer circumferential surface of the pulley 100 to surround the other catching end 310. At this time, the pair of catching ends 310 of the driven part 300 is configured to have different profiles in an axial direction of the pulley 100, thereby making it possible to minimize interference between the power transmission members 200 surrounding the pulley 100.

At this time, the power transmission apparatus 1000 of the present invention may be configured to prevent friction between the power transmission members 200 while maintaining tension of the power transmission member 200 using a plurality of idle rollers for preventing unnecessary contact between the power transmission members 200.

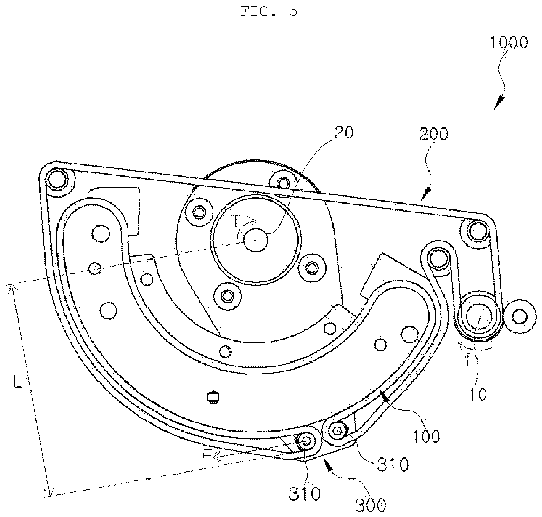

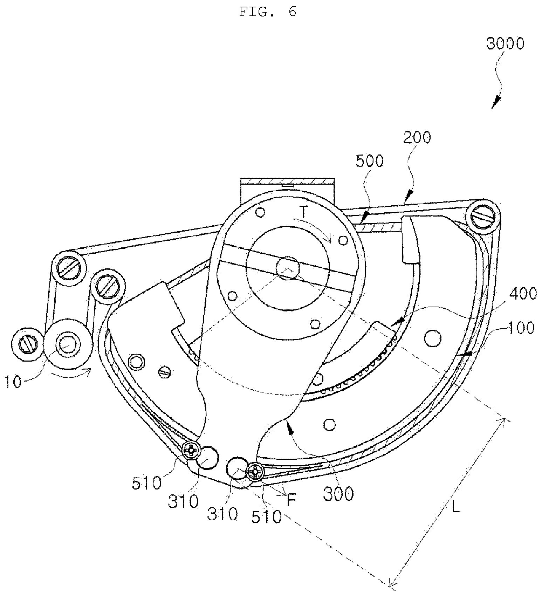

In more detail, the power transmission apparatus 1000 according to the above-described configuration may be modified using various coupling and fixing means suitable for the apparatus to be applied without departing from the gist of the present invention. At this time, the driven part 300 may include the pair of catching ends 310 and may be configured through a fixing means for connecting the pair of catching ends 310 with the driven shaft 20 so that the pair of catching ends 310 rotate, or a separate fixing means for independently fixing the pair of catching ends 310 to the driven shaft 20 according to the gist of the present invention. As illustrated in FIGS. 5 and 6, the driven part 300 may be formed as a rocker arm having one side fixed so as to rotate with the driven shaft 20 in parallel, and the other side extending to have a predetermined length L outward in the radial direction of the driven shaft. At this time, the rocker arm 300 further includes a pair of fixed ends 310 to which the power transmission member 200 is wound on the other side, and the power transmission member 200 is configured to surround the driving shaft 10 and the pair of fixed ends 310 on one side in the thickness direction, thereby making it possible to form the power transmission apparatus 1000 of the present invention according to the first embodiment described above.

At this time, the pulley 100 is formed to have an outer circumferential surface forming a predetermined angle, and has a shape curved downward so that the upper side has a predetermined curvature, and is formed to surround an outer side surface of the power transmission member 200 passing through the pair of fixed ends 310, thereby making it possible to further reduce the overall profile of the apparatus according to the diameter of the pulley 100. That is, the driven shaft 20 does not form a concentric shaft with the pulley 100, and is formed to be radially spaced apart from a centrifuge of the pulley 100, thereby making it possible to overcome the limitation according to the radius formed by the pulley 100 when designing. That is, the pulley 100 in the power transmission apparatus 1000 of the present invention having the above-described configuration may be modified as various configurations in which the power transmission member 200 fastened to the driving shaft 10 surrounds the pair of catching ends 310 and forms a guide for rotating the pair of catching ends 310.

At this time, the power transmission apparatus 1000 of the present invention may further include a fixed gear formed to surround a portion of the outer circumferential surface of the pulley 100 and formed to press the power transmission member on the outer circumferential surface opposite to the pulley 100, thereby maintaining tension of the power transmission member 200 surrounding the outer circumferential surface of the pulley 100, and preventing separation of the power transmission member 200.

In addition, the power transmission apparatus 1000 of the present invention a slip belt 500 having a pair of fixed ends 510 each provided to the outside of the pair of catching ends 310 formed on the other side the rocker arm 300 to surround the upper side of the driven shaft 20, and having both ends fixed to the pair of fixed ends 510 of the rocker arm 300 so as to press the driven shaft 20 downward, and interposed inside the power transmission members 200 in contact with each other, thereby making it possible to prevent interference between the power transmission members 200.

**< 1-1-th Embodiment : Vertical Direction Arrangement Structure for Increasing Gear Ratio >**

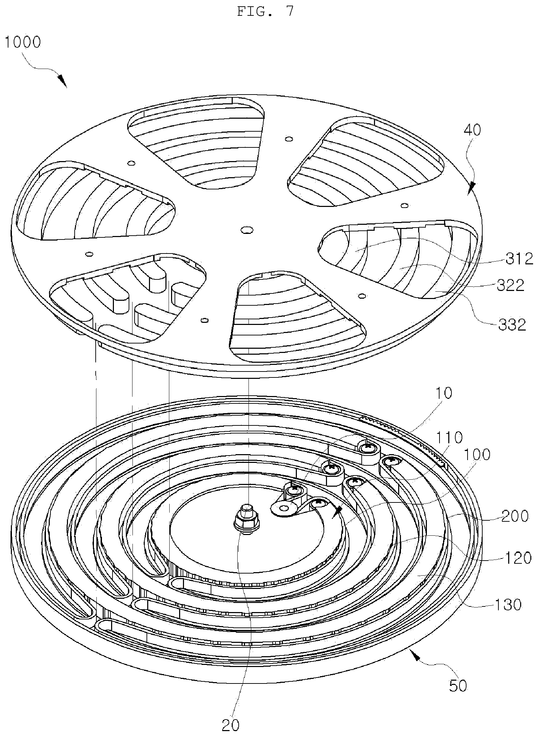

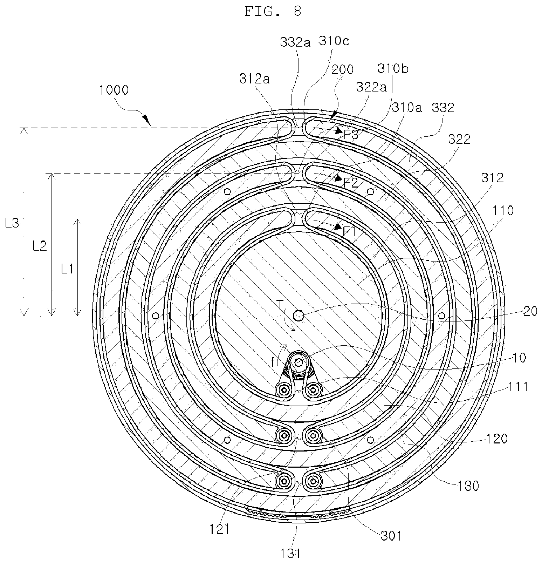

FIG. 7 is an exploded perspective view illustrating a power transmission apparatus 1000 according to a 1-1-th embodiment of the present invention, and FIG. 8 is a cross-sectional view illustrating the power transmission apparatus 1000 according to the 1-1-th embodiment of the present invention. Referring to FIGS. 7 and 8, the power transmission apparatus 1000 according to the 1-1-th embodiment of the present invention may include a pulley 100 having an outer circumferential surface forming a predetermined angle, a power transmission member 200 that is provided to surround the driving shaft and the outer circumferential surface of the pulley and transmits a rotational force of the driving shaft, a driven part 300 provided outward in a radial direction of the pulley and forming a pair of catching ends respectively surrounding the power transmission member in a direction opposite to each other, a lower plate 50 to which the pulley 100 is fixed to an upper side, and an upper plate 40 fastened to cover the lower plate 50.
At this time, the pulley 100 is configured with a plurality of pulleys including a first pulley 110 forming an opening 111 partially hollowed on the outer circumferential surface, and a second pulley 120 provided to be spaced apart by a predetermined distance outward in a radial direction of the first pulley 110 and forming an opening 121 in the same direction as the first pulley 110, and one or more driven parts 300 including a first driven part 312 interposed between the first pulley 110 and the second pulley 120 may be provided in a direction (radial direction) perpendicular to the driven shaft. At this time, it is preferable that the power transmission member 200 is configured to surround the driving shaft 10 and the driven part 300 on one side in the thickness direction, and surround the outer circumferential surface of the plurality of pulleys 100 on the other side.
Accordingly, the rotational force (f) of the driving shaft 10 is applied to each of catching ends 310a, 310b, and 310c formed in the openings 312a, 322a, and 332a of the plurality of driven parts 312, 322, and 332 interposed between the plurality of pulleys 110, 120, and 130 arranged in the radial direction of the driven shaft 20, such that a gear ratio increases as the rotation of the driven shaft 20 decreases. At this time, torque T at the driven shaft 20 of the power transmission apparatus 1000 according to the 1-1-th embodiment of the present invention is proportional to Equation 2 below.

$$\text{Equation 2:} \quad T = \sum \left( L_n \times F_n \right)$$

The force F applied to each of the catching ends 310a, 310b, and 310c is inversely proportional to a distance L from the driven shaft 20 to the respective catching ends 310a, 310b, and 310c, and the power transmission member 200 is configured to be alternately wound around each of the catching ends 310 in the order of the first pulley 110, the first driven part 312, the second pulley 120, and the second driven part 322 arranged in a straight line, thereby reducing the rotation applied to the driven shaft 20.
In addition, the plurality of driven parts 312, 322, and 332 are preferably provided on the same plane concentric with the pulley 100. At this time, in order to assemble the power transmission member 200 that alternately surrounds the plurality of pulleys 110, 120, and 130 and the driven parts 312, 322, and 332, the plurality of pulleys 110, 120, and 130 are fixed to the lower plate 50, and the plurality of driven parts 312, 322, and 332 are formed to face downward on the upper plate 40, thereby allowing the plurality of driven parts 312, 322, and 332 to be rotated along the circumferential direction of the pulleys 110, 120, and 130 by the rotation of the power transmission member 200. At this time, the driving shaft 10 is independent of the lower plate 50 and the pulley 100, and is preferably fixed to the upper plate 40 so as to rotate with the plurality of driven parts 312, 322, and 332 in parallel.

**< 1-2-th Embodiment : Horizontal Direction Arrangement Structure for Increasing Gear Ratio >**

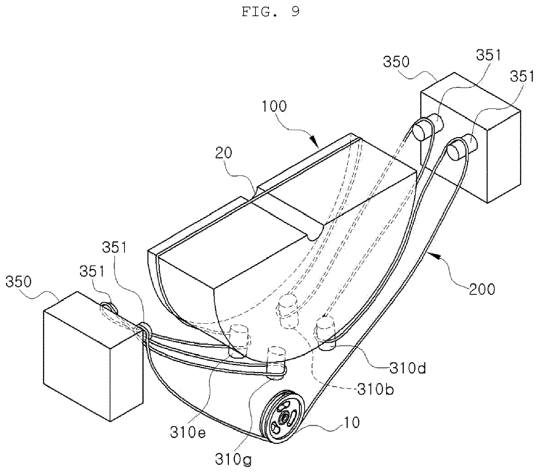

FIG. 9 is a view illustrating a power transmission apparatus according to a 1-2-th embodiment of the present invention. The power transmission apparatus 1000 according to the 1-2-th embodiment of the present invention is configured so that the driven part 300 forms the plurality of catching ends 310 provided to protrude in a direction perpendicular to the outer circumferential direction of the pulley 100, and the power transmission member 200 alternately surrounds the outer circumferential surfaces of the plurality of catching ends 310 in the circumferential direction of the pulley 100. That is, the power transmission member 200 for transmitting the rotational force of the driving shaft 10 is wound around the driven part 300 and operates to rotate the pulley 100 axially. At this time, the driving shaft 10 may be spaced outward in the radial direction of the pulley 100 so that one side surface of the power transmission member 200 surrounds the driving shaft 10 and the outer circumferential surface of the pulley 100.

That is, as illustrated in FIG. 9, in the power transmission apparatus 1000 according to the 1-2-th embodiment of the present invention, the pulley 100 is configured to form a concentric circle with the driven shaft 20 and to rotate with the driven shaft 20 in parallel, and the driven part 300 is fixed to rotate with the pulley 100 in parallel, and may be formed to transmit the rotational force of the driving shaft 10 to the driven shaft 20. At this time, the power transmission apparatus 1000 further includes a plurality of fixed rollers 351 spaced outward in the radial direction of the pulley 100 by a predetermined distance to be symmetrical with each other respect to the driven shaft 20, and provided corresponding to the number of the catching ends 310 adjacent in an axial direction of the driven shaft 20. The power transmission member 200 alternately surrounds the plurality of fixed rollers 351 and catching ends 310 provided in the same direction with respect to the driven shaft 20, surrounds the outer circumferential surface of the pulley 100 and surrounds the plurality of fixed rollers 351 and catching ends 310 provided on opposite sides, and is coupled to the driving shaft 10.

In more detail, the plurality of fixed rollers 351 may be fixedly installed on idlers 350 provided to be symmetrical to each other with respect to the driven shaft 20 by being spaced outward in the radial direction of the pulley 100 by a predetermined distance, and the idlers 350 are preferably formed to be fixed at predetermined positions independent of the pulley and the driven part 300. At this time, the power transmission member 200 drawn out from the driving shaft 10 surrounds any one fixed roller 351a in any one idler 350 provided on one side in the radial direction of the driven shaft 20, surrounds any one catching end 310b of the plurality of catching ends 310 of the pulley 100 provided at a position corresponding to the one fixed roller 351a, surrounds another fixed roller 351c provided to be spaced by a predetermined distance in the axial direction of the driven shaft 20 from the one fixed roller 351a - another catching end 310d provided on the outer circumferential surface of the pulley 100 at a position corresponding to another fixed roller 351c, surrounds the outer circumferential surface of the pulley 100, surrounds the catching end 310e-the fixed roller 351f-the catching end 310g-the fixed roller 351h provided on the other side in the radial direction of the driven shaft 20 in this order, is then coupled to the driving shaft 20. Accordingly, the rotational force (f) of the driving shaft 10 is applied to the plurality of catching ends 310 arranged in the radial direction of the pulley 100, respectively, and the gear ratio increases as the rotation of the pulley 100 formed to rotate with the driven shaft 20 in parallel is reduced.

< Second embodiment: power transmission according to timing belt pulley >

In a power transmission apparatus 2000 according to a second embodiment of the present invention, the power transmission member 200 is made of a timing belt having gear teeth (hereinafter, referred to as screw threads) formed therein, and the pulley 100 is configured to have a thread engaging with the power transmission member 200 made of the timing belt on the outer circumferential surface, and transmits power according to the rotation of the driving shaft 10 to the driven shaft 20. Hereinafter, the power transmission apparatus 2000 according to the second embodiment of the present invention according to the power transmission method of the above-described configuration will be classified and described.

< 2-1-th embodiment: power transmission according to rotational drive of pulley using timing belt >

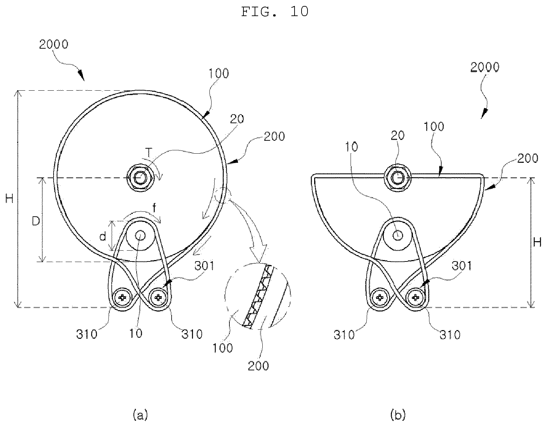

FIG. 10 is a view illustrating a power transmission apparatus according to a 2-1-th embodiment of the present invention. Referring to FIG. 10, the power transmission apparatus 2000 according to a 2-1-th embodiment of the present invention includes a pulley 100 having an outer circumferential surface forming a predetermined angle, a power transmission member 200 that is provided to surround the driving shaft 10 and the outer circumferential surface of the pulley 100 and transmits a rotational force of the driving shaft 10, and a driven part 300 provided outward in the radial direction of the pulley 100 and forming a pair of catching ends 310 respectively surrounding the power transmission member 200 in a direction opposite to each other, and the power transmission member 200 is made of a belt having a plurality of screw threads formed therein, and is provided to surround the driving shaft 10, the pair of catching ends 310, and the outer circumferential surface of the pulley 100 inwardly. At this time, the pulley 100 is made to rotate with the driven shaft 20 in parallel, the driven part 300 is fixed to be independent from the pulley 100, and the driving shaft 10 is provided inside the pulley 100, thereby making it possible to maintain a high gear ratio and reduce an overall profile L formed by the power transmission apparatus 2000.

< 2-2-th embodiment: power transmission according to rotational drive of driven part using timing belt >

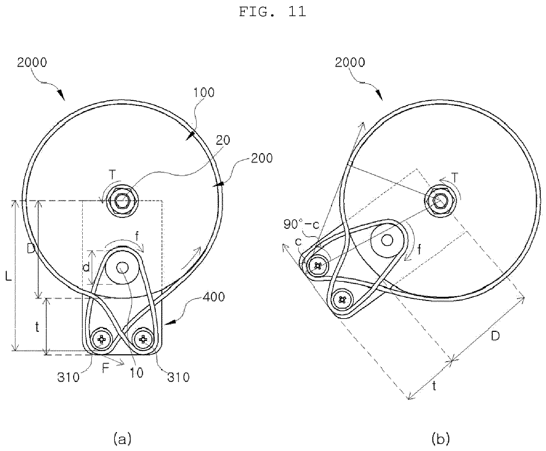

FIG. 11 is a view illustrating a power transmission apparatus according to a 2-2-th embodiment of the present invention. Referring to FIG. 11, in the power transmission apparatus according to the 2-2-th embodiment of the present invention, the driven part 300 is made to rotate with the driven shaft 20 in parallel, and the pulley 100 is fixed to perform independent rotation with the driven part 300.

In more detail, the rotational force f of the driving shaft 10 is transmitted to the fixed pulley 100 through the power transmission member 200, and the power transmission member 200 and the pulley 100 are engaged so that a reaction force according to the rotational force f is transmitted in a tangential direction between the catching end 310 and the pulley 100. At this time, the reaction force ($f(D/d)$) transmitted to the catching end 310 is proportional to the gear ratio of the driving shaft 10 and the pulley 100. At this time, torque (T) in the driven shaft 20 according to a rotational force (f) of the driving shaft is proportional to a product ($T \propto L \times F$) of a linear distance (L) from the driven shaft 20 to the catching end 310 and the rotational force (F) in an orthogonal direction applied to the catching end 310. At this time, the rotational force (F) in the orthogonal direction applied to the catching end 310 is proportional to the reaction force ($f*(D/d)*\cos^{\theta}$) of the power transmission member 200 acting in a contact surface direction of the catching end 310 and the pulley 100. That is, the rotational force (torque, T) acting on the driving shaft is derived from Equation 3 below. At this time, the tangential angle (c) is in the range of $0 < c < 1/2$, and is determined by a distance t spaced from the outer circumferential surface of the pulley 100 to the catching end 310.

Equation                                                                                                              3:

$$T \propto L \times F = (D + t) \times (f \times (D/d) \times \cos(c))$$

At this time, as illustrated in (b) of FIG. 10, the cos(c) according to the tangent angle (c) between the catching end 310 and the pulley 100 is proportional to $t/(D+d)$, and Equation 3 applying this may be represented by Equation 4 below. That is, the power transmission apparatus 2000 according to the 2-2-th embodiment of the present invention may form an increased gear ratio in proportion to the linear distance t formed by the pair of catching ends 310 from the pulley 100.

Equation 4:  $$T \propto L \times F = f \times (D/d) \times t$$

According to the present invention having the configuration described above, the high gear ratio may be formed while increasing the spatial efficiency by reducing the overall profile formed by the pulley that rotates with the driven shaft in parallel using the belt or wire, and the blocks and tackles or the half-moon member provided outside the pulley.

The present invention is not limited to the above-mentioned embodiments, and may be variously applied, and may be variously modified without departing from the gist of the present invention claimed in the claims.

[Detailed Description of Main Elements]

10: Driving shaft
20: Driven shaft
1000, 2000, 3000: Power transmission apparatus
100: Pulley
110, 120, 130: First pulley, second pulley, and third pulley
111, 121, 131: Opening
200: Power transmission member
210: One end portion
220: The other end portion
201: Timing belt
202 : Wire
300: Driven part
301: Block and tackle
302: Half-moon member
310: Catching end
320: Opening
312, 322, 332: First driven part, second driven part, and third driven part
312a, 322a, 332a: Opening

40: Upper plate
50: Lower plate
350: Idler
351: Fixed roller
400: Fixed gear
500: Slip belt
510: Fixed end

## Claims

1. A power transmission apparatus for transmitting power from a driving shaft that rotates by receiving power to a driven shaft that rotates by receiving the power of the driving shaft, the power transmission apparatus comprising:

   a pulley having an outer circumferential surface forming a predetermined angle;
   a power transmission member that is provided to surround the driving shaft and the outer circumferential surface of the pulley and transmits a rotational force of the driving shaft; and
   a driven part provided outward in a radial direction of the pulley and forming a pair of catching ends respectively surrounding the power transmission member in a direction opposite to each other.

2. The power transmission apparatus of claim 1, wherein the power transmission member is provided to surround the driving shaft and an outer circumferential surface of the driven part on one side in a thickness direction, and surround the outer circumferential surface of the pulley on the other side.

3. The power transmission apparatus of claim 2, wherein the pair of catching ends of the driven part are formed in a straight line in the opposite direction, and
   the power transmission member is configured to surround the outer circumferential surface of the pulley so that one end portion that surrounds the driving shaft surrounds any one catching end provided in the facing opposite direction.

4. The power transmission apparatus of claim 3, wherein the pair of catching ends of the driven part are configured to have different profiles in an axial direction of the pulley.

5. The power transmission apparatus of claim 2, wherein the pulley is configured with a plurality of pulleys including:

   a first pulley forming an opening partially hollowed on the outer circumferential surface, and
   a second pulley provided to be spaced apart by a predetermined distance outward in a radial direction of the first pulley and forming an opening in the same direction as the first pulley,
   the driven part is interposed between the first pulley and the second pulley, and
   the power transmission member is configured to surround the driving shaft and the driven part on one side in the thickness direction, and surround the outer circumferential surface of the plurality of pulleys on the other side.

6. The power transmission apparatus of claim 1, wherein the driven part forms a plurality of catching ends provided to protrude in a direction perpendicular to an outer circumferential direction of the pulley, and
   the power transmission member is configured to alternately surround outer circumferential surfaces of the plurality of catching ends in the circumferential direction of the pulley.

7. The power transmission apparatus of claim 6, further comprising a plurality of fixed rollers spaced outward in the radial direction of the pulley by a predetermined distance to be symmetrical with each other with respect to the driven shaft, and provided corresponding to the number of the catching ends adjacent in an axial direction of the driven shaft, wherein the power transmission member alternately surrounds the plurality of fixed rollers and catching ends provided in the same direction with respect to the driven shaft.

8. The power transmission apparatus of claim 1, wherein the power transmission member is made of a belt having a plurality of screw threads formed therein, and is provided to surround the driving shaft, the pair of catching ends, and the outer circumferential surface of the pulley inwardly, and
   the outer circumferential surface of the pulley is formed with a plurality of screw threads engaged with an inner side of the power transmission member.

FIG. 1

(a)                                    (b)

FIG. 2

(a)

(b)

(c)

(d)

FIG. 3

FIG. 4

(a)

(b)

FIG. 5

FIG. 6

FIG. 7

FIG. 8

FIG. 9

FIG. 10

(a)                              (b)

FIG. 11

(a)　　　　　　　　　　　　　　(b)

Europäisches
Patentamt

European
Patent Office

Office européen
des brevets

# EUROPEAN SEARCH REPORT

**Application Number**

EP 21 15 0031

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 44 41 954 A1 (ABB MANAGEMENT AG [CH]) 30 May 1996 (1996-05-30) * figure 2 * | 1-8 | INV. F16H7/02 F16H7/04 F16H55/36 |
| X | US 4 486 183 A (POSIVIATA RICHARD W [US] ET AL) 4 December 1984 (1984-12-04) * figure 5 * | 1-8 | |
| E | EP 3 800 364 A1 (BALANCE SYSTEMS SRL [IT]) 7 April 2021 (2021-04-07) * figure 1 * | 1 | |

TECHNICAL FIELDS
SEARCHED        (IPC)

F16H

The present search report has been drawn up for all claims

| Place of search | Date of completion of the search | Examiner |
|---|---|---|
| Munich | 12 May 2021 | Revilla, Xavier |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

............................................................................................

& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 21 15 0031

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2021

| Patent document cited in search report | | | Publication date | Patent family member(s) | | | Publication date |
|---|---|---|---|---|---|---|---|
| DE 4441954 | | A1 | 30-05-1996 | NONE | | | |
| US 4486183 | | A | 04-12-1984 | BR | 8103904 | A | 09-03-1982 |
| | | | | CA | 1151905 | A | 16-08-1983 |
| | | | | EP | 0043687 | A2 | 13-01-1982 |
| | | | | ES | 8204106 | A1 | 16-04-1982 |
| | | | | JP | S5740163 | A | 05-03-1982 |
| | | | | JP | S6253745 | B2 | 11-11-1987 |
| | | | | MX | 154078 | A | 29-04-1987 |
| | | | | US | 4486183 | A | 04-12-1984 |
| EP 3800364 | | A1 | 07-04-2021 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200000579
- KR 20190129774